# DEMANDE DE BREVET EUROPEEN

(11) **EP 2 020 364 A1**
(43) Date de publication de la demande: **04.02.2009**
(21) Numéro de dépôt: 08160721.0
(22) Date de dépôt: 18.07.2008
(51) Int. Cl.: B62D 21/15, B62D 25/08

(54) **Caisse de véhicule automobile à structure avant renforcée, et véhicule correspondant**

(30) Priorité: 31.07.2007 FR 0756844
(71) Demandeur: Peugeot Citroën Automobiles SA, 78140 Vélizy-Villacoublay (FR)
(72) Inventeur: Malois, Bruno, 95540 Mery sur Oise (FR); Gaudiller, Régis, 92160 Antony (FR)
(74) Mandataire: Allain, Laurent

(57) **Abrégé**

La caisse (10) de véhicule automobile comprend une structure avant (14) transversale, séparant une cellule d'habitacle (12) d'un compartiment moteur, un pied latéral vertical (30) prolongeant la structure avant (14), celle-ci comportant une paroi sensiblement verticale (22), une paroi sensiblement horizontale (26) et un premier renfort (27) disposé à proximité desdites parois. Un deuxième renfort (44), disposé du côté de l'habitacle (12) et sensiblement en regard du premier renfort (27), relie la structure avant (14) au pied latéral (30), les premier et deuxième renforts (27, 44) étant situés de part et d'autre de la paroi verticale (22).

## Description

La présente invention concerne une caisse de véhicule automobile, le véhicule s'étendant suivant un axe longitudinal, la caisse étant du type comprenant :
- une structure avant s'étendant transversalement suivant un axe sensiblement perpendiculaire audit axe longitudinal, et séparant une cellule d'habitacle d'un compartiment moteur;
- un pied prolongeant la structure avant latéralement et verticalement du côté de la cellule d'habitacle ; et
la structure avant transversale comportant une paroi sensiblement verticale, une paroi sensiblement horizontale et un premier élément de renfort de la paroi sensiblement verticale disposé à proximité desdites parois.

Un exemple d'une telle caisse est décrit dans le document FR-A-2 813 271. Dans ce document, il est proposé un ensemble de structure de caisse comportant des renforts de cloche de suspension, et destiné à prévenir une déformation éventuelle en rotation d'au moins une cloche.

Toutefois, cet ensemble de structure n'évite pas les déformations du tablier dans l'habitacle lors d'un choc frontal du véhicule.

L'invention a pour but de remédier à ces inconvénients en proposant un aménagement qui permette d'améliorer la sécurité des passagers avant du véhicule.

A cet effet, l'invention a pour objet une caisse de véhicule automobile du type précité, caractérisée en ce que la structure avant comprend un deuxième élément de renfort, disposé du côté de la cellule d'habitacle et sensiblement en regard du premier élément de renfort, le deuxième élément de renfort reliant la structure avant transversale au pied latéral, les premier et deuxième éléments de renfort étant situés de part et d'autre de la paroi sensiblement verticale.

La caisse selon l'invention peut comporter une ou plusieurs des caractéristiques suivantes :
- le deuxième élément de renfort est de forme générale en L, à section transversale sensiblement constante ;
- le deuxième élément de renfort est une équerre qui comprend une première aile et une deuxième aile s'étendant respectivement sensiblement parallèlement à l'axe longitudinal et à l'axe transversal du véhicule ;
- la longueur de l'aile transversale du deuxième élément de renfort est supérieure à celle de l'aile longitudinale du deuxième élément de renfort ;
- le deuxième élément de renfort comprend une section transversale en forme d'oméga, dont la section centrale en U est continue et la hauteur de la section centrale en U sensiblement constante ;
- le deuxième élément de renfort est relié à un support latéral de traverse de planche de bord solidaire du pied latéral, le deuxième élément de renfort, le support latéral et le pied étant tous soudés ensemble ;
- le deuxième élément de renfort à section transversale en forme d'oméga comprend des rebords soudés, d'une part, au support latéral de traverse de planche de bord et, d'autre part, à la paroi sensiblement verticale ;
- la caisse comprend en outre une traverse inférieure de baie, une deuxième paroi formant doublure de la traverse inférieure de baie, et un élément de liaison, ce dernier et le premier élément de renfort étant sensiblement alignés de part et d'autre de la deuxième paroi formant doublure de la traverse inférieure de baie ; et
- l'élément de liaison est relié à un support de suspension par des points de soudage électriques.

L'invention a également pour objet un véhicule automobile, caractérisé en ce qu'il comprend une caisse telle que décrite précédemment.

L'invention sera mieux comprise à la lecture de la description qui va suivre, donnée uniquement à titre d'exemple, et faite en se référant aux dessins annexés dans lesquels :
- la figure 1 est une vue en perspective d'un véhicule automobile équipé d'une caisse selon l'invention ;
- la figure 2 est une vue en perspective analogue à la figure 1 avec arrachement partiel suivant un plan vertical longitudinal ;
- la figure 3 est une vue schématique en coupe verticale longitudinale selon le plan III de la figure 1 ;
- la figure 4 est une vue schématique en coupe verticale transversale selon le plan IV de la figure 1 ;
- la figure 5 est une vue analogue à la figure 3, montrant la transmission des efforts en cas de choc frontal ; et
- la figure 6 est une vue schématique en coupe horizontale longitudinale selon le plan VI de la figure 1, montrant la transmission des efforts en cas de choc frontal.

Dans tout ce qui suit les orientations indiquées telles que « gauche », « droite », « longitudinale », « transversale » et « verticale », ainsi que les termes de position « avant », « arrière », « inférieur(e) », « supérieur(e) », correspondent aux orientations du véhicule dans lesquelles l'axe X est l'axe longitudinal du véhicule orienté d'arrière en avant, l'axe Y est l'axe transversal orienté de droite à gauche, et l'axe Z est l'axe vertical orienté de bas en haut.

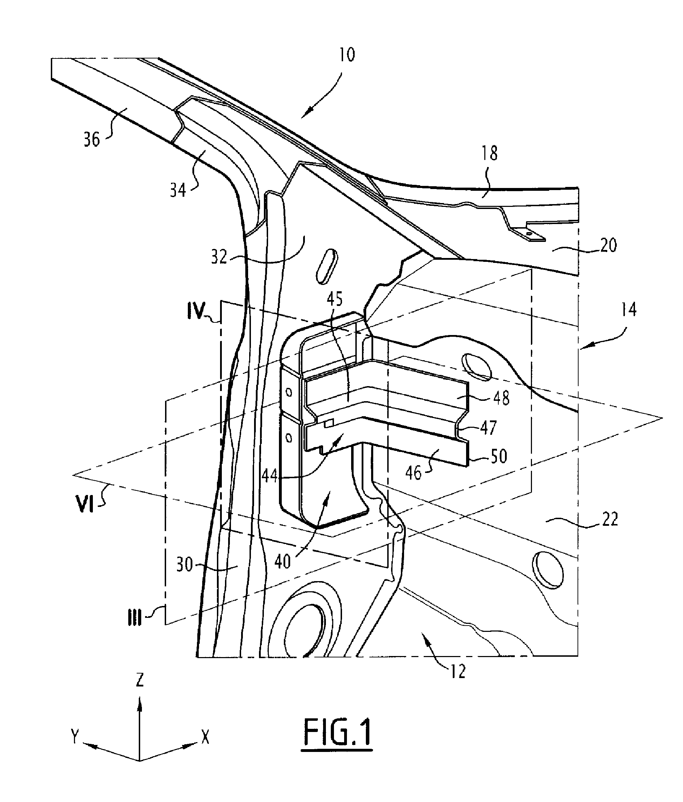

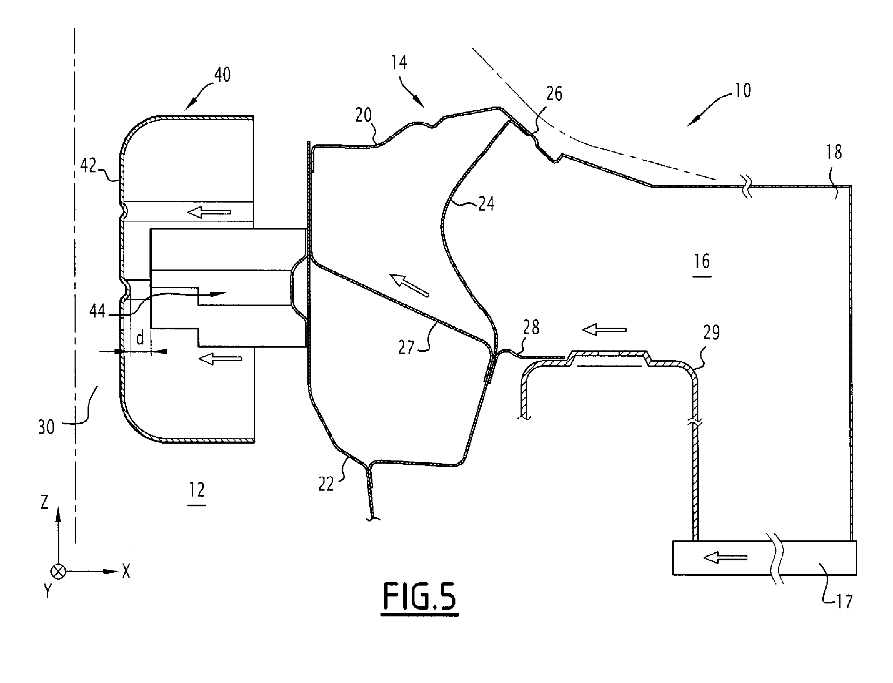

Dans la figure 1, une caisse 10 d'un véhicule automobile s'étend suivant un axe longitudinal X. Elle comprend une traverse avant 14 s'étendant suivant l'axe transversal Y et séparant une cellule d'habitacle 12 d'un compartiment moteur 16 (figure 5).

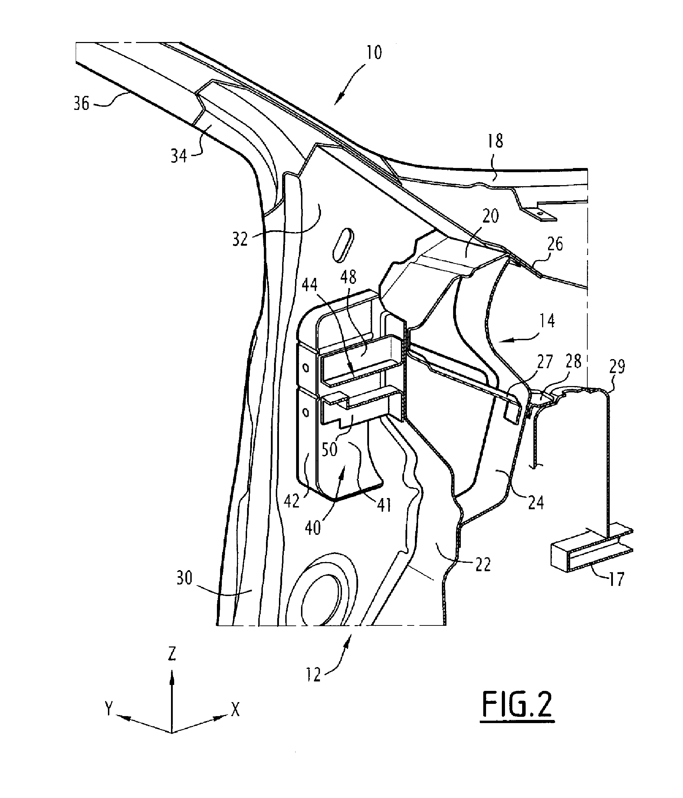

Le compartiment moteur 16 est supporté par des longerons longitudinaux 17 (figures 2, 3 et 5) et délimité par une paroi latérale 18 sur chacun des côtés du véhicule.

La traverse avant 14 comprend une traverse inférieure de baie 20 disposée sensiblement horizontalement et reliée à un tablier supérieur 22 disposé sensiblement verticalement. Une doublure 24 (figures 2, 3 et 5) de la traverse inférieure de baie 20 est disposée en avant du tablier supérieur 22 et reliée, à la fois, à ce dernier et à la traverse inférieure de baie 20.

Un auvent 26 disposé sensiblement horizontalement prolonge la traverse inférieure de baie 20 vers le compartiment moteur 16.

La structure avant 14 définit ainsi un profil fermé dans lequel un premier élément de renfort 27, également appelé gousset arrière d'auvent gauche, est disposé intérieurement. Le premier élément de renfort 27 est de forme générale plane rectangulaire. Il s'étend sensiblement de manière inclinée de bas en haut, et d'avant en arrière, depuis la doublure 24 de la traverse inférieure de baie 20 vers le tablier supérieur 22. Le premier élément de renfort 27 est relié par points de soudure électrique à la doublure et au tablier.

Un élément de liaison 28 (figure 2), également appelé gousset d'auvent gauche, relie, par points de soudure électrique, la doublure 24 à un support de suspension avant gauche 29, lui-même relié structurellement au longeron 17 aménagé du côté gauche du véhicule.

Le premier élément de renfort 27 et l'élément de liaison 28 sont soudés en regard et dans le prolongement l'un de l'autre, de part et d'autre de la doublure 24 de la traverse inférieure de baie 20. Cet aménagement permet une meilleure résistance à l'écrasement lors d'un choc frontal.

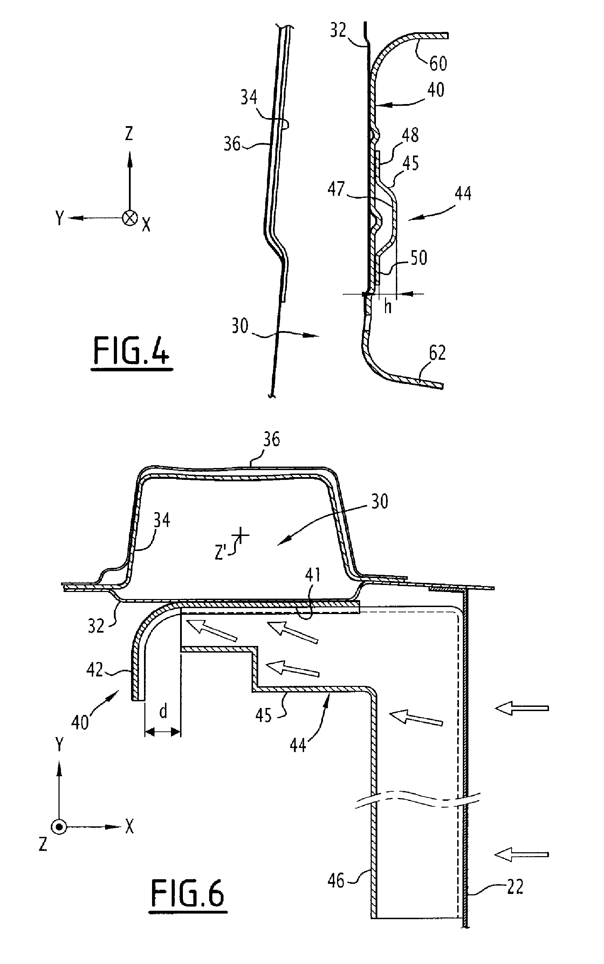

La caisse 10 comprend également un pied avant gauche 30 qui prolonge la structure avant transversale 14 latéralement et verticalement du côté de la cellule d'habitacle 12. Le pied avant gauche 30 comprend une doublure d'aile avant gauche 32 et un renfort de pied 34 reliés entre eux et formant un profil fermé (figure 6). Une pièce 36 forme la cote d'habitacle du côté gauche du véhicule.

Un support latéral gauche 40 est disposé sensiblement à mi-hauteur du pied 30 avant gauche et relié à celui-ci par points de soudage électrique. Il comporte une partie courante longitudinale 41 et un rebord périphérique comportant une aile transversale verticale 42. Le support 40 est destiné à supporter et à fixer une traverse de planche de bord (non représentée).

Un deuxième élément de renfort 44 formant une équerre de forme générale en L et à section transversale sensiblement constante en forme d'oméga est disposé du côté de la cellule d'habitacle 12. Une première aile 45 et une deuxième aile 46 de la forme en L s'étendent respectivement sensiblement parallèlement à l'axe longitudinal X et à l'axe transversal Y du véhicule. La longueur de la deuxième aile 46 est supérieure à celle de la première aile 45 afin de limiter les déformations du tablier 22 suivant la direction longitudinale X lors d'un choc frontal du véhicule.

Le deuxième élément de renfort 44 comprend une partie centrale continue 47 de section transversale en forme générale de U disposée entre un rebord supérieur 48 et un rebord inférieur 50 également continus. La hauteur h (figure 4) de la section en U est sensiblement constante suivant les axes longitudinal X et transversal Y.

Les rebords supérieur 48 et inférieur 50 de la première aile 45 sont reliés par points de soudage électrique à la partie courante longitudinale 41 du support latéral droit 40.

Les rebords supérieur 48 et inférieur 50 de la deuxième aile 46 sont reliés par points de soudure électrique au tablier supérieur 22.

Le deuxième élément de renfort 44 est ainsi soudé sur le pied avant gauche 30 par l'intermédiaire du support 40 et directement sur le tablier supérieur 22. Il est conçu pour améliorer la liaison entre ces deux dernières pièces. Il limite les intrusions du tablier supérieur 22 dans la cellule d'habitacle 12 lors d'un choc frontal du véhicule. Lors d'un tel choc, le pied avant gauche 30 a tendance à se déformer en tournant autour d'un axe Z' (figure 6) parallèle à l'axe Z, dans le sens correspondant à une torsion dudit pied depuis l'habitacle vers l'extérieur du véhicule, c'est-à-dire dans le sens des aiguilles d'une montre selon la figure 6.

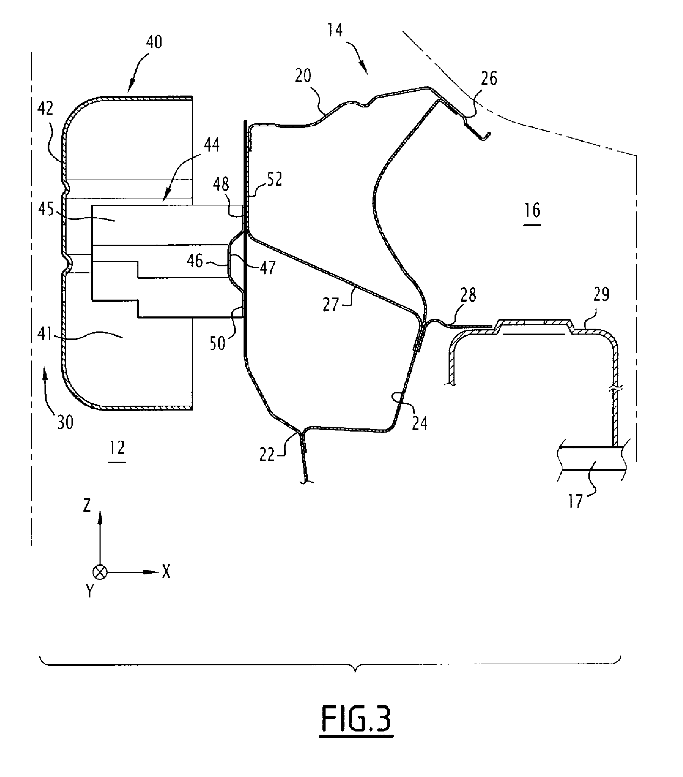

Comme représenté sur la figure 3, l'extrémité supérieure 52 du premier élément de renfort 27 est située, au moins partiellement, sensiblement en regard du rebord supérieur 48 du deuxième élément de renfort 44, les premier et deuxième éléments de renfort 27 et 44 étant positionnés de part et d'autre de la paroi formant le tablier supérieur 22.

Comme représenté sur la figure 4, le rebord périphérique du support latéral gauche 40 comprend également une aile supérieure 60 et une aile inférieure 62 horizontales s'étendant transversalement et orientées vers l'intérieur de l'habitacle 12.

Lors de la fabrication de la caisse 10 du véhicule, le support latéral gauche 40 est préparé et assemblé par soudage électrique sur la doublure d'aile 32 du pied avant gauche 30. Dans une autre phase de préparation, le premier élément de renfort 27 et le deuxième élément de renfort 44 sont préparés et assemblés par soudage électrique sur le tablier supérieur 22, de part et d'autre de celui-ci.

Lors de l'assemblage du sous-ensemble de pied avant gauche 30 sur la caisse en cours de montage, le deuxième élément de renfort 44 est assemblé par points de soudure électrique avec le support latéral gauche 40, déjà assemblé sur la doublure d'aile avant gauche 32.

Un jeu fonctionnel d suivant l'axe longitudinal X est nécessaire entre l'extrémité arrière du deuxième élément de renfort 44 et l'aile transversale 42 du support latéral gauche 40 pendant le process d'assemblage des différentes parties de la caisse. En effet, la doublure d'aile avant 32 étant soudée après le tablier supérieur 22 sur la plate-forme de soudage, il est nécessaire de tenir compte des dispersions dimensionnelles de chacun des sous-ensembles préparés et des tolérances de l'assemblage. Le jeu d requis entre l'extrémité arrière du deuxième élément de renfort 44 et de l'aile transversale 42 du support latéral avant gauche 40 est de 4mm minimum.

Lors d'un choc frontal, les efforts sont transmis depuis les longerons longitudinaux 17 vers l'habitacle 12. Des flèches indiquent, dans les figures 5 et 6, le chemin de transmission des efforts. Ainsi, les efforts résultant d'un choc frontal sont répartis dans les longerons longitudinaux 17 et dans la structure avant 14 par l'intermédiaire des supports de suspension 29.

Le premier élément de renfort 27 permet de transmettre une partie des efforts vers le support latéral gauche 40 à travers le profilé en forme d'oméga du deuxième élément de renfort 44. Les efforts sont ainsi distribués partiellement sur le pied avant gauche 30 par l'intermédiaire du support latéral droit 40, le jeu d pouvant être annulé lors du choc frontal.

Grâce à l'invention, la liaison entre le tablier supérieur et le pied avant du véhicule est renforcée, l'intrusion du tablier supérieur s'en trouvant largement limitée en cas de choc frontal. La sécurité des passagers du véhicule est ainsi nettement améliorée.

## Revendications

1. Caisse (10) de véhicule automobile, le véhicule s'étendant suivant un axe longitudinal (X), la caisse étant du type comprenant :
- une structure avant (14) s'étendant transversalement suivant un axe (Y) sensiblement perpendiculaire audit axe longitudinal (X), et séparant une cellule d'habitacle (12) d'un compartiment moteur (16);
- un pied (30) prolongeant la structure avant (14) latéralement et verticalement du côté de la cellule d'habitacle (12) ;
la structure avant (14) transversale comportant une paroi sensiblement verticale (22), une paroi sensiblement horizontale (26) et un premier élément (27) de renfort de la paroi sensiblement verticale (22) disposé à proximité desdites parois,
**caractérisée en ce que**
la structure avant (14) comprend un deuxième élément de renfort (44), disposé du côté de la cellule d'habitacle (12) et sensiblement en regard du premier élément de renfort (27), le deuxième élément de renfort (44) reliant la structure avant (14) transversale au pied latéral (30), les premier et deuxième éléments de renfort (27, 44) étant situés de part et d'autre de la paroi sensiblement verticale (22).

2. Caisse de véhicule automobile selon la revendication 1, **caractérisée en ce que** le deuxième élément de renfort (44) est de forme générale en L, à section transversale sensiblement constante.

3. Caisse de véhicule automobile selon la revendication 2, **caractérisée en ce que** le deuxième élément de renfort (44) est une équerre qui comprend une première aile (45) et une deuxième aile (46) s'étendant respectivement sensiblement parallèlement à l'axe longitudinal (X) et à l'axe transversal (Y) du véhicule.

4. Caisse de véhicule automobile selon la revendication 3, **caractérisée en ce que** la longueur de l'aile transversale (46) du deuxième élément de renfort est supérieure à celle de l'aile longitudinale (45) du deuxième élément de renfort.

5. Caisse de véhicule automobile selon l'une quelconque des revendications précédentes, **caractérisée en ce que** le deuxième élément de renfort (44) comprend une section transversale en forme d'oméga, dont la section centrale en U (47) est continue et la hauteur de la section centrale en U (47) sensiblement constante.

6. Caisse de véhicule automobile selon l'une quelconque des revendications précédentes, **caractérisée en ce que** le deuxième élément de renfort (44) est relié à un support latéral (40) de traverse de planche de bord solidaire du pied latéral (30), le deuxième élément de renfort, le support latéral et le pied étant tous soudés ensemble.

7. Caisse de véhicule automobile selon la revendication 5 ou 6, **caractérisée en ce que** le deuxième élément de renfort (44) à section transversale en forme d'oméga comprend des rebords (48, 50) soudés, d'une part, au support latéral (40) de traverse de planche de bord et, d'autre part, à la paroi sensiblement verticale (22).

8. Caisse de véhicule automobile selon l'une quelconque des revendications précédentes, **caractérisée en ce que** la caisse comprend en outre une traverse inférieure de baie (20), une deuxième paroi (24) formant doublure de la traverse inférieure de baie (20), et un élément de liaison (28), ce dernier et le premier élément de renfort (27) étant sensiblement alignés de part et d'autre de la deuxième paroi (24) formant doublure de la traverse inférieure de baie (20).

9. Caisse de véhicule automobile selon la revendication 8, **caractérisée en ce que** l'élément de liaison (28) est relié à un support de suspension (29) par des points de soudage électriques.

10. Véhicule automobile comprenant une caisse suivant l'une quelconque des revendications précédentes.
